# EUROPEAN PATENT APPLICATION

(11) **EP 4 538 109 A1**
(43) Date of publication of application: **16.04.2025**
(21) Application number: 23819004.5
(22) Date of filing: 31.05.2023
(51) Int. Cl.: B60L 53/80, G01F 23/00

(54) **BATTERY COMPARTMENT AND BATTERY SWAPPING STATION**

(30) Priority: 06.06.2022 CN 202210630199
(71) Applicant: Contemporary Amperex Technology (Hong Kong) Limited, Central, Hong Kong (HK)
(72) Inventor: CHEN, Weifeng, Ningde, Fujian 352100 (CN); QUE, Shibiao, Ningde, Fujian 352100 (CN); CHEN, Can, Ningde, Fujian 352100 (CN); CHEN, Disong, Ningde, Fujian 352100 (CN)
(74) Representative: Ran, Handong
(86) International application number: PCT/CN2023/097601
(87) International publication number: WO 2023/236839

(57) **Abstract**

A battery compartment (100) and a battery swapping station (1000). The battery compartment (100) comprises a compartment body (20) and a liquid level detection apparatus (30). The battery compartment (100) is provided with the liquid level detection apparatus (30) for detecting the level of liquid in the compartment body (20) in real time, providing accurate detection information, mastering a water accumulation condition in the compartment body (20), and responding in time. When the detected liquid level reaches a preset height, the battery compartment (100) can take measures such as alarming, power-off and apparatus transferring, so as to avoid circuit and mechanical failures caused by accumulated water in the battery compartment (100).

## Description

### CROSS-REFERENCE TO RELATED APPLICATIONS

This application claims priority to Chinese Patent Application No. 202210630199.0, filed on June 06, 2022 and entitled "BATTERY COMPARTMENT AND BATTERY SWAP STATION", which is incorporated herein by reference in its entirety.

### TECHNICAL FIELD

This application relates to the technical field of batteries, and in particular, to a battery compartment and a battery swap station.

### BACKGROUND

Batteries are widely used in various electrical apparatuses, such as mobile phones, notebook computers, battery cars, electric cars, electric planes, electric ships, electric toy cars, electric toy ships, electric toy planes and electric tools.

Limited by battery capacity, the electrical apparatuses need to be charged frequently. Battery swap stations are energy stations that provide charging for batteries and rapid battery replacement, and ensuring the safety of the battery swap stations is becoming a widespread concern.

### SUMMARY

This application provides a battery compartment and a battery swap station to improve safety performance of the battery compartment of a cover body.

According to a first aspect, this application provides a battery compartment, including a compartment body and a liquid level detecting apparatus. The liquid level detecting apparatus is disposed in the compartment body and used for performing real-time detection on a liquid level in the compartment body.

The battery compartment of this application is provided with the liquid level detecting apparatus, used for performing real-time detection on the liquid level in the compartment body, and providing accurate detection information, so water accumulation conditions in the compartment body are mastered, and response is made in time. When the detected liquid level reaches a predetermined height, the battery compartment can take measures, such as giving an alarm, powering off and transferring a device, thereby avoiding circuit and mechanical failures of the battery compartment due to water accumulation, reducing the difficulty of operating and maintaining the battery compartment, improving the safety of the battery compartment, and preventing insulation failure or electric shock hazards.

According to one embodiment of this application, the liquid level detecting apparatus includes:
a first liquid level detecting member and a second liquid level detecting member, the first liquid level detecting member is used for detecting whether the liquid level in the compartment body reaches a first predetermined height, the second liquid level detecting member is used for detecting whether the liquid level in the compartment body reaches a second predetermined height, and the second predetermined height is higher than the first predetermined height.

In these optional embodiments, the liquid level detecting apparatus includes the first liquid level detecting member and the second liquid level detecting member. The liquid level detecting apparatus realizes secondary detection based on a difference in the predetermined heights of the liquid level detecting members, so that the battery compartment takes different measures based on the difference in the liquid level of the accumulated water, i.e., the monitoring conditions of the first liquid level detecting member and the second liquid level detecting member. On the premise of meeting and ensuring the insulativity and safety of the battery compartment, the operation and maintenance cost of the battery compartment is reduced, and the detection accuracy of the liquid level height is further improved.

According to one embodiment of this application, the compartment body is configured to give an alarm when the first liquid level detecting member detects that the liquid level reaches the first predetermined height, and/or, the compartment body is configured to give an alarm when the second liquid level detecting member detects that the liquid level reaches the second predetermined height.

In these optional embodiments, In these optional embodiments,the compartment body is configured to give an alarm when the liquid level of the accumulated water reaches the first predetermined height and/or the second predetermined height. In this way, on the one hand, management staff are conveniently notified of the level of water accumulation and remove the danger in time; on the other hand, the alarm can also inform passers-by to pay attention to the danger.

According to one embodiment of this application, the liquid level detecting apparatus further includes:
a supporting member, connected to the compartment body,
wherein the first liquid level detecting member and the second liquid level detecting member are disposed on the supporting member.

In these optional embodiments, the supporting member is connected to the compartment body, the first liquid level detecting member and the second liquid level detecting member are installed on the supporting member, and the supporting member provides support for the first liquid level detecting member and the second liquid level detecting member. The installation position of the supporting member is adjustable, and can be adjusted according to the requirements for an internal structure of the battery compartment, and the flexibility is high.

According to one embodiment of this application, the first liquid level detecting member and/or the second liquid level detecting member are/is selected from at least one of a water level sensor or a waterlogging sensor.

In these optional embodiments, the first liquid level detecting member and/or the second liquid level detecting member may be constructed as sensors. Only when the first liquid level detecting member and/or the second liquid level detecting member comes into contact with water, the water level sensor or the waterlogging sensor is triggered so as to monitor the liquid level, the monitoring accuracy is high, operation is convenient, and the price is low.

According to one embodiment of this application, the compartment body further includes charging devices accommodated in the compartment body, charging connectors are installed on the charging devices, and installation positions of the charging connectors are higher than a detection liquid level of the liquid level detecting apparatus.

In these optional embodiments, the charging connectors are used for charging batteries, and the charging connectors will leak or short circuit when coming into contact with water, which will not only cause damage to the charging devices, but will also cause electric shock accidents. The installation positions of the charging connectors are higher than the detection liquid level of the liquid level detecting apparatus, an alarm is given when the liquid level detecting apparatus monitors that the liquid level reaches a predetermined height, and measures, such as shutting down power supplies of the charging devices are taken to effectively prevent the charging connectors from coming into contact with water.

According to one embodiment of this application, the installation positions of the charging connectors are higher than the second predetermined height.

In these optional embodiments, the installation positions of the charging connectors are higher than the second predetermined height, so that there is a certain safety distance between the charging connectors and the second predetermined height, and the charging connectors do not come into contact with the accumulated water even when the liquid level height of the accumulated water in the compartment body reaches the second predetermined height, which is relatively safe.

According to one embodiment of this application, the charging devices include charging bases, the charging connectors are installed on the charging bases, and heights of the charging bases are higher than the second predetermined height.

In these optional embodiments, the batteries may be fixed directly to the charging bases to improve the stability of the batteries during charging and prevent the batteries from slipping. Moreover, the heights of the charging bases are higher than the second predetermined height to enable the charging connectors provided on the charging bases to be similarly higher than the second predetermined height so as to ensure the safety of the charging devices.

According to one embodiment of this application, the charging devices further include charging cabinets, each charging cabinet includes a first supporting frame and a charging unit, the charging unit is installed on the first supporting frame, and an installation height of the charging unit is higher than the detection liquid level of the liquid level detecting apparatus.

In these optional embodiments, the charging cabinets are provided to provide electrical energy to the charging bases for charging the batteries via the charging bases and the charging connectors, and the charging cabinets are installed on the first supporting frames to increase the heights of the charging cabinets, so that the installation heights of the charging units are higher than the detection liquid level of the liquid level detecting apparatus, thereby preventing the charging cabinets from contacting with the accumulated water and the occurrence of leakage of electrical energy effectively.

According to one embodiment of this application, the installation height of each charging unit is at least higher than the first predetermined height.

In these optional embodiments, the heights of the charging units are higher than those of the charging devices, the charging cabinets are disposed on the first supporting frames, moreover, the charging units are usually semi-closed and have a certain water-blocking function, and vents thereof are designed in middle-upper portions. Therefore, the installation heights of the charging units only need to be higher than the first predetermined height, and on the premise of meeting the safety requirements, the overall heights of the heavier charging units can be appropriately reduced and the installation stability of the whole charging devices is maintained.

According to one embodiment of this application, the compartment body further includes a thermal management device accommodated in the compartment body, the thermal management device includes a second supporting frame and a thermal management unit, the thermal management unit is installed on the second supporting frame, and an installation height of the thermal management unit is higher than the detection liquid level of the liquid level detecting apparatus.

In these optional embodiments, the installation height of the thermal management device is higher than the detection liquid level of the liquid level detecting apparatus, thereby effectively preventing the accumulated water from coming into contact with the thermal management unit in the thermal management device, and improving the operation stability of the thermal management device to a certain degree.

According to one embodiment of this application, the installation height of the thermal management unit is at least higher than the first predetermined height.

In these optional embodiments, based on the arrangement of the second supporting frame, the height of the thermal management unit is higher than those of the charging devices, and the installation height of the thermal management unit only needs to be higher than the first predetermined height, thereby ensuring safety of the thermal management unit.

According to one embodiment of this application, the compartment body is further internally provided with a control device, the control device includes a third supporting frame and a control unit, the control unit is installed on the third supporting frame, and an installation height of the control unit is higher than the detection liquid level of the liquid level detecting apparatus.

In these optional embodiments, the height of the control device is higher than those of the charging devices, the control device is disposed on the third supporting frame, and moreover, the control unit of the control device is generally closed and has a certain water-blocking function. Therefore, the installation height of the control unit is higher than the detection liquid level of the liquid level detecting apparatus, thereby effectively preventing the control unit from coming into contact with the accumulated water.

According to one embodiment of this application, the installation height of the control unit is at least higher than the first predetermined height.

In these optional embodiments, based on the arrangement of the third supporting frame, the overall height of the control unit is higher than those of the charging devices, and the installation height of the control unit only needs to be higher than the first predetermined height, thereby ensuring safety of the control unit.

According to one embodiment of this application, the compartment body is configured to power off when the first liquid level detecting member detects that the liquid level reaches the first predetermined height.

In these optional embodiments, when the first liquid level detecting member detects that the liquid level reaches the first predetermined height, the battery compartment cannot be guaranteed to operate safely, thereby controlling the whole battery compartment to power off, thereby preventing short-circuiting of electrical components in the battery compartment, reducing the loss of the battery compartment, and also preventing electric shock of a person due to electrification of the accumulated water.

According to one embodiment of this application, the compartment body includes a first chamber and a second chamber stacked in a height direction, and at least one of the first chamber and the second chamber is provided with the liquid level detecting apparatus.

In these optional embodiments, the compartment body includes the first chamber and the second chamber stacked in the height direction, the overall layout is more reasonable, and the overall space structure is more compact, thereby achieving the purpose of using a smaller space to achieve larger functions.

According to one embodiment of this application, in the height direction, the first chamber is disposed below the second chamber, and the liquid level detecting apparatus is disposed in the first chamber.

In these optional embodiments, the first chamber disposed in the lower layer is more prone to water accumulation due to the lower terrain. Therefore, the liquid level detecting apparatus is disposed in the first chamber for more effectively protecting the battery compartment.

According to one embodiment of this application, the first chamber is provided with a drainage structure.

In these optional embodiments, the first chamber is provided with the drainage structure to drain the accumulated water in the compartment body out of the compartment body, thereby preventing the accumulated water from rising continuously to ensure the safety of the battery compartment.

According to a second aspect, this application provides a battery swap station, including a battery and the battery compartment according to any implementation of the first aspect of this application. The battery compartment is used for placing the battery.

The battery swap station of this application is provided with a liquid level detecting apparatus, used for performing real-time detection on a liquid level in a compartment body. When the detected liquid level reaches a predetermined height, the battery compartment can take measures, such as giving an alarm, and powering off, thereby avoiding circuit and mechanical failures of the battery swap station due to water accumulation, reducing the difficulty of operating and maintaining the battery swap station, improving the safety of the battery swap station, and preventing insulation failure or electric shock hazards.

### BRIEF DESCRIPTION OF DRAWINGS

The following describes features, advantages and technical effects of exemplary embodiments of this application with reference to the drawings.
FIG. 1 is a schematic structural diagram of a battery swap station according to some embodiments of this application.
FIG. 2 is a schematic structural diagram of a vehicle according to some embodiments of this application.
FIG. 3 is a schematic structural diagram of a battery compartment according to some embodiments of this application.
FIG. 4 is a schematic structural diagram of a liquid level detecting apparatus of a battery compartment according to some embodiments of this application.
FIG. 5 is a schematic structural diagram of a battery compartment in another view according to some embodiments of this application.

The drawings are not necessarily drawn to actual scale.

List of reference numerals:
1000, Battery swap station; 100, Battery compartment; 200, Parking platform; 300, Vehicle; 301, Controller; 302, Motor; 10, Battery; 20, Compartment body; 21, First chamber; 21, Second chamber; 30, Liquid level detecting apparatus; 31, First liquid level detecting member; 32, Second liquid level detecting member; 33, Supporting member; 40, Charging device; 41, Charging connector; 42, Charging base; 43, Charging cabinet; 50, Thermal management device; 51, Second supporting frame; 52, Thermal management unit; 60, Control device; 61, Third supporting frame; and 62, Control unit.

### DETAILED DESCRIPTION OF EMBODIMENTS

To make the objectives, technical solutions, and advantages of embodiments of this application clearer, the following gives a clear description of the technical solutions in the embodiments of this application with reference to the accompanying drawings in the embodiments of this application. Apparently, the described embodiments are merely a part of but not all of the embodiments of this application. Based on the embodiments in this application, all other embodiments obtained by a person of ordinary skill in the art without creative labor fall within the scope of protection of this application.

Unless otherwise defined, all technical and scientific terms used in this application have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of accompanying drawings of this application are intended as non-exclusive inclusion. The terms "first", "second", etc. in the specification and claims of this application or in the accompanying drawings described above are used to distinguish between different objects, and are not used to describe a particular order or relationship of priority.

Reference to "embodiment" herein implies that particular features, structures, or characteristics described in conjunction with an embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, it is hereby noted that unless otherwise expressly specified and defined, the terms "mount", "connected", "connection", and "attach" are understood in a broad sense. For example, it may be a fixed connection, a detachable connection, or an integrated connection; or may be a direct connection or an indirect connection implemented through an intermediary; or may be internal communication between two components. To a person of ordinary skill in the art, the specific meaning of the above terms in this application may be understood according to specific situations.

The term "and/or" in this application indicates merely a relation for describing the related items, and represents three possible relationships. For example, A and/or B may represent the following three circumstances: A alone, both A and B, and B alone. In addition, the character "/" in this application generally indicates an "or" relationship of the successively related items.

In the embodiments of this application, the same reference numerals indicate the same components, and detailed descriptions of the same components are omitted in different embodiments for the sake of brevity. Understandably, dimensions, such as thickness, length, and width of various components in the embodiments of this application shown in the accompanying drawings, and dimensions, such as overall thickness, length, and width of an integrated apparatus are merely illustrative descriptions, but do not constitute any limitation on this application.

"A plurality of" referred to in this application means two or more (including two).

At present, with the continuous development of battery technologies, the application scenarios of batteries are also increasing, and how to quickly replenish the electrical energy of the batteries has become one of the factors limiting the promotion of the batteries. According to the principle of storing energy in the batteries themselves, the batteries need to be replenished with the electric energy periodically, and the batteries are replenished with the electric energy in the form of charging for a longer period of time. Therefore, by directly replacing depleted batteries with fully charged batteries for electrical apparatuses, the efficiency of replenishing the electrical energy for the electrical apparatuses can be effectively improved. Therefore, battery swap stations come into being, and are becoming more and more popular in life. The battery swap stations are energy stations that provide charging for power batteries of electric vehicles and rapid replacement of the power batteries. With the large number of layouts of the battery swap stations, ensuring the safety of the battery swap stations is also getting more and more extensive attention from people.

The inventors have found that with the frequent occurrence of extreme weather, heavy rainfall occurs over a large area in several regions, causing a large amount of water to accumulate in the battery swap stations, forcing devices placed in the battery swap stations to be out of service and damaging the devices by flooding, and making the battery swap stations more susceptible to insulation failures or electric shock hazards.

In view of the above problems, the inventors, after in-depth research, proposes a battery compartment with a liquid level detecting apparatus, used for performing real-time detection on a liquid level in the compartment body, and providing accurate detection information, so water accumulation conditions in the compartment body are mastered, and response is made in time. When the detected liquid level reaches a predetermined height, the battery compartment can take measures, such as giving an alarm, powering off and transferring a device, thereby avoiding circuit and mechanical failures of the battery compartment due to water accumulation, reducing the difficulty of operating and maintaining the battery compartment, improving the safety of the battery compartment, and preventing insulation failure or electric shock hazards.

A battery mentioned in an embodiment of this application means a unitary physical module that includes one or more battery cells to provide a higher voltage and a higher capacity. For example, the battery may include a battery module, a battery pack, or the like.

Embodiments of this application disclose a battery compartment and a battery swap station. The battery swap station is used for placing the battery, charging the battery, and performing replacement of a fully charged battery to an electrical apparatus. The electrical apparatus may be a vehicle. The vehicle may be an oil-fueled vehicle, a natural gas vehicle, or a new energy vehicle. The new energy vehicle may be a battery electric vehicle, a hybrid electric vehicle, a range-extended electric vehicle, or the like. Exemplarily, the electrical apparatus may be a heavy-duty truck.

For ease of description in the following embodiments, a vehicle is used as an example of the electrical apparatus according to an embodiment of this application.

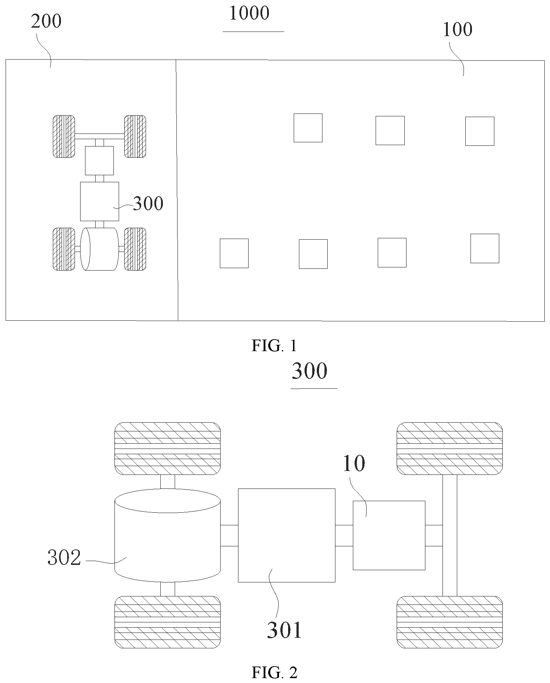

Referring to FIG. 1, FIG. 1 is a schematic structural diagram of a battery swap station according to some embodiments of this application.

As shown in FIG. 1, the battery swap station of an embodiment of this application includes a battery compartment 100 and a parking platform 200, the parking platform is used for supporting the electrical apparatus, and the battery compartment is used for storing and charging batteries so as to perform replacement of a fully charged battery to the electrical apparatus, where the electrical apparatus is a vehicle 300.

Referring to FIG. 2, FIG. 2 is a schematic structural diagram of a vehicle according to some embodiments of this application.

As shown in FIG. 2, the vehicle 300 may be an oil-fueled vehicle, a natural gas vehicle, or a new energy vehicle. The new energy vehicle may be a battery electric vehicle, a hybrid electric vehicle, a range-extended electric vehicle, or the like. A battery 10 is disposed inside the vehicle 300. The battery 10 may be disposed at the bottom, front, or rear of the vehicle 300. The battery 10 may be used for supplying power to the vehicle 300. For example, the battery 10 may serve as an operating power supply of the vehicle 300.

The vehicle 300 may further include a controller 301 and a motor 302. The controller 301 is configured to control the battery 10 to supply power to the motor 302, for example, to meet electrical energy requirements in starting, navigating, or running the vehicle 300.

In some embodiments of this application, the battery 10 serves not only as an operating power supply of the vehicle 300, but may also serve as a driving power supply of the vehicle 300 to provide driving power for the vehicle 300 in place of or partly in place of fuel oil or natural gas.

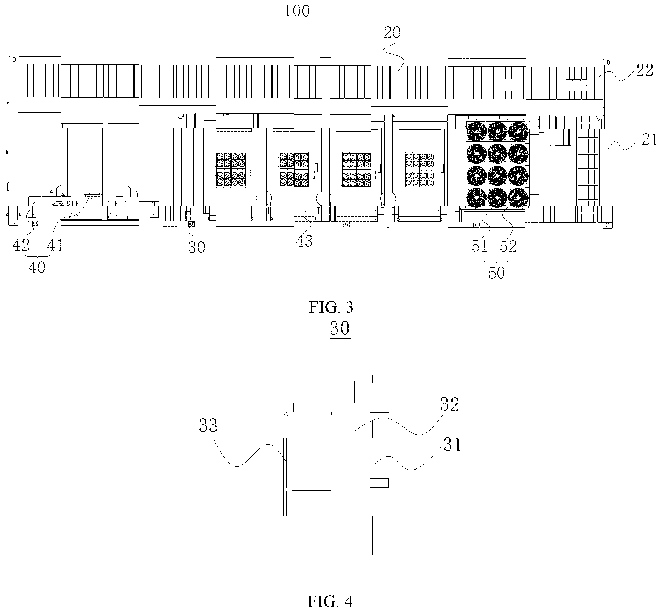

Referring to FIG. 3 and FIG. 4, FIG. 3 is a schematic structural diagram of a battery compartment according to some embodiments of this application, and FIG. 4 is a schematic structural diagram of a liquid level detecting apparatus of a battery compartment according to some embodiments of this application.

As shown in FIG. 1 to FIG. 4, the battery compartment 100 of this application includes a compartment body 20 and a liquid level detecting apparatus 30. The liquid level detecting apparatus 30 is disposed in the compartment body 20 and used for performing real-time detection on a liquid level in the compartment body 20.

The compartment body 20 provides a base for installing and accommodating components, such as the liquid level detecting apparatus 30. The battery 10 is accommodated in the compartment body 20 and charging is accomplished within the compartment body 20. The compartment body 20 may be of a variety of shapes and sizes, such as a hollow structure or a centralized box structure.

Optionally, an arrangement direction of the compartment body 20 is perpendicular to a running direction of the vehicle.

The compartment body 20 is internally provided with a battery swap zone and a charging zone, the battery swap zone is used for replacing the battery 10 of the vehicle, the charging zone is used for placing the battery 10 and charging the battery 10, and the battery swap zone and the charging zone are arranged in a direction perpendicular to the running direction of the vehicle. The charging zone has charging devices 40. The charging devices 40 may be in the form of charging cabinets 43, charging bases or charging racks. In this way, the overall arrangement of the battery compartment 100 is neat and compact.

The liquid level detecting apparatus 30 is used for performing real-time detection on the liquid level in the compartment body 20. The liquid level detecting apparatus 30 may perform contact measurement on accumulated water or non-contact measurement on accumulated water.

Optionally, the liquid level detecting apparatus 30 includes a water level sensor, a waterlogging sensor, a tuning fork vibrating level meter, a magnetic float level meter, a pressure level meter, an ultrasonic level meter, a sonar level meter, a magnetic flap level meter, a radar level meter, a capacitance level meter, and the like, to measure the liquid level of the water accumulated in the compartment body 20.

Optionally, the liquid level detecting apparatus 30 is disposed at the bottom of the compartment body 20.

The battery compartment 100 of this application is provided with the liquid level detecting apparatus 30, used for performing real-time detection on the liquid level in the compartment body 20, and providing accurate detection information, so water accumulation conditions in the compartment body 20 are mastered, and response is made in time. When the detected liquid level reaches a predetermined height, the battery compartment 100 can take measures, such as giving an alarm, powering off and transferring a device, thereby avoiding circuit and mechanical failures of the battery compartment 100 due to water accumulation, reducing the difficulty of operating and maintaining the battery compartment 100, improving the safety of the battery compartment 100, and preventing insulation failure or electric shock hazards.

According to one embodiment of this application, the liquid level detecting apparatus 30 includes:
a first liquid level detecting member 31 and a second liquid level detecting member 32, the first liquid level detecting member 31 is used for detecting whether the liquid level in the compartment body 20 reaches a first predetermined height, the second liquid level detecting member 32 is used for detecting whether the liquid level in the compartment body 20 reaches a second predetermined height, and the second predetermined height is higher than the first predetermined height.

In embodiments of this application, the second predetermined height is higher than the first predetermined height, that is, a second predetermined height value is greater than a first predetermined height value. It can be understood that during the continuous rise of the accumulated water in the compartment body 20, the water level of the accumulated water first reaches the first predetermined height, and the first liquid level detecting member 31 monitors that the liquid level in the compartment body 20 reaches the first predetermined height, and at this time, the battery compartment 100 carries out a first response in time, for example, the battery compartment 100 takes measures, such as giving an alarm, and powering off. If the water level continues to rise to the second predetermined height and the second liquid level detecting member 32 monitors that the liquid level in the compartment body 20 reaches the second predetermined height, at this time, the battery compartment 100 carries out a second response in time, for example, the battery compartment 100 starts a drainage function and takes other measures.

Optionally, the first predetermined height is 5 mm, 10 mm, 15 mm, 20 mm, 25 mm, 30 mm, etc., the second predetermined height is 10 mm, 15 mm, 20 mm, 25 mm, 30 mm, etc., and the second predetermined height is higher than the first predetermined height.

In these optional embodiments, the liquid level detecting apparatus 30 includes the first liquid level detecting member 31 and the second liquid level detecting member 32. The liquid level detecting apparatus 30 realizes secondary detection based on a difference in the predetermined heights of the liquid level detecting members, so that the battery compartment 100 takes different measures based on the difference in the liquid level of the accumulated water, i.e., the monitoring conditions of the first liquid level detecting member 31 and the second liquid level detecting member 32. On the premise of meeting and ensuring the insulativity and safety of the battery compartment 100, the operation and maintenance cost of the battery compartment 100 is reduced, and the detection accuracy of the liquid level height is further improved.

According to one embodiment of this application, as shown in FIG. 3 and FIG. 4, the compartment body 20 is configured to give an alarm when the first liquid level detecting member 31 detects that the liquid level reaches the first predetermined height, and/or, the compartment body 20 is configured to give an alarm when the second liquid level detecting member 32 detects that the liquid level reaches the second predetermined height.

In embodiments of this application, when the first liquid level detecting member 31 monitors that the water level in the compartment body 20 reaches the first predetermined height, the first liquid level detecting member 31 gives an alarm, or, the first liquid level detecting member 31 transmits a detection signal to an alarm apparatus of the compartment body 20, and the alarm apparatus gives an alarm. When the second liquid level detecting member 32 monitors that the water level in the compartment body 20 reaches the second predetermined height, the second liquid level detecting member 32 gives an alarm, or, the second liquid level detecting member 32 transmits a detection signal to the alarm apparatus of the compartment body 20, and the alarm apparatus gives an alarm.

Optionally, giving an alarm includes giving an alarm sound, flickering light, etc.

Optionally, the occurrence of giving an alarm when the liquid level of the accumulated water reaches the first predetermined height is different from the occurrence of giving an alarm when the liquid level of the accumulated water reaches the second predetermined height. For example, the alarm giving at the first predetermined height is an alarm sound, and the alarm given at the first predetermined height is an alarm sound and light flickering; or, the alarm given at the first predetermined height is yellow light flickering, and the alarm given at the first predetermined height is red light flickering.

In these optional embodiments, the compartment body 20 is configured to give an alarm when the liquid level of the accumulated water reaches the first predetermined height and/or the second predetermined height. In this way, on the one hand, management staff are conveniently notified of the level of water accumulation and remove the danger in time; on the other hand, the alarm can also inform passers-by to pay attention to the danger.

According to one embodiment of this application, the liquid level detecting apparatus 30 further includes:
a supporting member 33, connected to the compartment body 20, and
the first liquid level detecting member 31 and the second liquid level detecting member 32 are disposed on the supporting member 33.

Optionally, the supporting member 33 is installed on the bottom wall of the compartment body 20, and the first liquid level detecting member 31 and the second liquid level detecting member 32 are installed on the supporting member 33 and exist at a distance from the bottom wall, i.e., the first liquid level detecting member 31 and the second liquid level detecting member 32 are provided in a suspended manner.

Optionally, the supporting member 33 adopts a supporting frame, a support frame, a supporting plate, or the like.

In these optional embodiments, the supporting member 33 is connected to the compartment body 20, the first liquid level detecting member 31 and the second liquid level detecting member 32 are installed on the supporting member 33, and the supporting member 33 provides support for the first liquid level detecting member 31 and the second liquid level detecting member 32. The installation position of the supporting member 33 is adjustable, and can be adjusted according to the requirements for an internal structure of the battery compartment 100, and the flexibility is high.

According to one embodiment of this application, the first liquid level detecting member 31 and/or the second liquid level detecting member 32 are/is selected from at least one of a water level sensor or a waterlogging sensor.

Optionally, the first liquid level detecting member 31 and the second liquid level detecting member 32 are both selected from the water level sensor or the waterlogging sensor. Or, the first liquid level detecting member 31 is selected from the water level sensor, and the second liquid level detecting member 32 is selected from the waterlogging sensor.

Exemplarily, in the case where the first liquid level detecting member 31 and the second liquid level detecting member 32 are both selected from the waterlogging sensor, a first waterlogging sensor and a second waterlogging sensor are installed at the bottom of the compartment body 20 via the supporting member 33, and the first waterlogging sensor and the second waterlogging sensor are spaced apart from the bottom wall. The bottom end of the first waterlogging sensor is flush with a liquid level height corresponding to the first predetermined height value, and the bottom end of the second waterlogging sensor is flush with a liquid level height corresponding to the second predetermined height value. During the rise of the water level, when the liquid level height of the accumulated water is not lower than the bottom end of the first waterlogging sensor, only the first waterlogging sensor is triggered, and it is monitored that the liquid level height is greater than or equal to the first predetermined height value and is less than the second predetermined height value, the battery compartment 100 gives an alarm and powers off. When the liquid level height of the accumulated water is not lower than the bottom end of the second waterlogging sensor, both the first waterlogging sensor and the second waterlogging sensor are triggered, and it is monitored that the liquid level height is greater than or equal to the second predetermined height value, the battery compartment 100 gives an alarm and starts the drainage function.

It is hereby noted that the compartment body 20 may further be provided with a plurality of liquid level detecting members, for example, a third liquid level detecting member, and a fourth liquid level detecting member. It can be understood that more liquid level predetermined heights can be monitored, so as to improve the safety coefficient of the battery compartment 100.

In these optional embodiments, the first liquid level detecting member 31 and/or the second liquid level detecting member 32 may be constructed as sensors. Only when the first liquid level detecting member 31 and/or the second liquid level detecting member 32 comes into contact with water, the water level sensor or the waterlogging sensor is triggered so as to monitor the liquid level, the monitoring accuracy is high, operation is convenient, and the price is low.

According to one embodiment of this application, as shown in FIG. 3 and FIG. 4, the compartment body 20 further includes charging devices 40 accommodated in the compartment body 20, charging connectors 41 are installed on the charging devices 40, and installation positions of the charging connectors 41 are higher than a detection liquid level of the liquid level detecting apparatus 30.

In embodiments of this application, the compartment body 20 includes the plurality of charging devices 40 and the plurality of charging devices 40 are disposed in the charging zone. The plurality of charging devices 40 are spaced apart in the compartment body 20 in a direction perpendicular to the running direction of the vehicle, i.e., in the extension direction of the compartment body 20. Thereby, simultaneous charging of the plurality of batteries 10 is realized. The charging devices 40 are provided with the charging connectors 41, and the charging connector 41 in each charging device 40 is at least one, and the charging connectors 41 are used for restoring energy to the batteries 10 replaced from the vehicle. It is to be understood that the batteries 10 can be charged using the charging connectors 41 when the batteries 10 are placed in the charging devices 40. The specific number of the charging devices 40 may be set as desired.

Optionally, the liquid level detecting apparatus 30 includes the first liquid level detecting member 31 and the second liquid level detecting member 32, the first liquid level detecting member 31 is used for detecting the first predetermined height, the second liquid level detecting member 32 is used for detecting the second predetermined height, the second predetermined height is higher than the first predetermined height, and the installation positions of the charging connectors 41 are at least higher than the first predetermined height.

In these optional embodiments, the charging connectors 41 are used for charging the batteries 10, and the charging connectors 41 will leak or short circuit when coming into contact with water, which will not only cause damage to the charging devices 40, but will also cause electric shock accidents. The installation positions of the charging connectors 41 are higher than the detection liquid level of the liquid level detecting apparatus 30, an alarm is given when the liquid level detecting apparatus 30 monitors that the liquid level reaches a predetermined height, and measures, such as shutting down power supplies of the charging devices 40 are taken to effectively prevent the charging connectors 41 from coming into contact with water.

According to one embodiment of this application, the installation positions of the charging connectors 41 are higher than the second predetermined height.

According to one embodiment of this application, distances between the installation positions of the charging connectors 41 and the second predetermined height are 10 mm, 20 mm, 30 mm, etc.

In these optional embodiments, the installation positions of the charging connectors 41 are higher than the second predetermined height, so that there is a certain safety distance between the charging connectors 41 and the second predetermined height, and the charging connectors 41 do not come into contact with the accumulated water even when the liquid level height of the accumulated water in the compartment body 20 reaches the second predetermined height, which is relatively safe. Management staff in the station can transfer the batteries on the basis of powering off, preventing the batteries from being damaged or leaking electricity.

According to one embodiment of this application, the charging devices 40 include charging bases 42, the charging connectors 41 are installed on the charging bases 42, and heights of the charging bases 42 are higher than the second predetermined height.

In embodiments of this application, the charging devices 40 include the plurality of charging bases 42, and the plurality of charging bases 42 are each provided with at least one charging connector 41. The batteries 10 are placed on the charging bases 42, the charging bases are connected to the compartment body 20, the charging bases are used for placing the batteries 10, the charging bases are provided with the charging connectors 41, and the charging connectors 41 come into contact with electrically conductive portions of the batteries 10, and charge the batteries 10. The charging bases have a fixing and supporting effect on the batteries 10. The charging bases may also be provided with positioning members, and when the batteries 10 are placed on the charging bases, the batteries 10 are positioned by the positioning members.

Optionally, the charging bases 42 are prepared using waterproof materials, or waterproof layers are disposed on the outer surfaces of the charging bases 42.

In these optional embodiments, the batteries 10 may be fixed directly to the charging bases to improve the stability of the batteries 10 during charging and prevent the batteries 10 from slipping. Moreover, the heights of the charging bases 42 are higher than the second predetermined height to enable the charging connectors 41 provided on the charging bases 42 to be similarly higher than the second predetermined height so as to ensure the safety of the charging devices 40.

According to one embodiment of this application, the charging devices 40 further include charging cabinets 43, each charging cabinet 43 includes a first supporting frame and a charging unit, the charging unit is installed on the first supporting frame, and an installation height of the charging unit is higher than the detection liquid level of the liquid level detecting apparatus 30.

In embodiments of this application, the charging devices 40 are accommodated in the compartment body 20, and the charging cabinets 43 in the charging devices 40 are electrically connected to the charging bases via cables to provide electrical energy to the charging bases, and the batteries 10 are charged through the charging connectors 41 on the charging bases 42.

Optionally, the plurality of charging cabinets 43 and the plurality of charging bases are provided, and each charging cabinet 43 may be connected to the plurality of charging base to provide electrical energy to the plurality of charging bases at the same time.

Optionally, the charging cabinets 43 are disposed on the side of the charging bases away from the vehicle, and the plurality of charging cabinets 43 are disposed in a centralized manner to facilitate the management of the charging cabinets 43.

In these optional embodiments, the charging cabinets 43 are provided to provide electrical energy to the charging bases for charging the batteries 10 via the charging bases and the charging connectors 41, and the charging units are installed on the first supporting frames to increase the heights of the charging units, so that the installation heights of the charging units are higher than the detection liquid level of the liquid level detecting apparatus 30, thereby preventing the charging cabinets 43 from contacting with the accumulated water and the occurrence of leakage of electrical energy effectively.

According to one embodiment of this application, the installation height of each charging unit is at least higher than the first predetermined height.

In these optional embodiments, the overall heights of the charging units are higher than those of the charging devices 40, the charging units are disposed on the first supporting frames, moreover, the charging units are usually semi-closed and have a certain water-blocking function, and vents thereof are designed in middle-upper portions. Therefore, the installation heights of the charging units only need to be higher than the first predetermined height, and on the premise of meeting the safety requirements, the overall heights of the heavier charging units can be appropriately reduced and the installation stability of the whole charging units is maintained.

According to one embodiment of this application, as shown in FIG. 3 and FIG. 4, the compartment body 20 further includes a thermal management device 50 accommodated in the compartment body 20, the thermal management device 50 includes a second supporting frame 51 and a thermal management unit 52, the thermal management unit 52 is installed on the second supporting frame 51, and an installation height of the thermal management unit 52 is higher than the detection liquid level of the liquid level detecting apparatus 30.

In embodiments of this application, the thermal management device 50 is provided close to the charging units, and the thermal management device 50 may cool down the batteries 10 that are being charged, thereby avoiding the performance of the batteries 10 from being affected by high temperature of charging.

Exemplarily, the thermal management device 50 includes a cooling cabinet, a second supporting frame 51, and cooling pipelines, and the cooling cabinet is disposed on the second supporting frame 51 so as to be supported. One ends of the cooling pipelines are connected to the charging bases 42, and coolant of the cooling cabinet flows to the charging bases 42 through the cooling pipelines to cool down the batteries 10 on the charging bases 42.

In these optional embodiments, the installation height of the thermal management device 50 is higher than the detection liquid level of the liquid level detecting apparatus 30, thereby effectively preventing the accumulated water from coming into contact with the thermal management unit 52 in the thermal management device 50, and improving the operation stability of the thermal management device 50 to a certain degree.

According to one embodiment of this application, the installation height of the thermal management unit 52 is at least higher than the first predetermined height.

In these optional embodiments, based on the arrangement of the second supporting frame 51, the overall height of the thermal management unit 52 is higher than those of the charging devices 40, and the installation height of the thermal management unit 52 only needs to be higher than the first predetermined height, thereby ensuring safety of the thermal management unit 52.

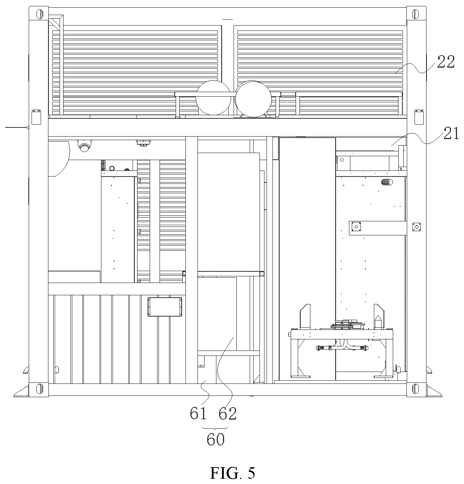

Referring to FIG. 5, FIG. 5 is a schematic structural diagram of a battery compartment in another view according to some embodiments of this application.

According to one embodiment of this application, as shown in FIG. 3 to FIG. 5, the compartment body 20 is further internally provided with a control device 60, the control device 60 includes a third supporting frame 61 and a control unit 62, the control unit 62 is installed on the third supporting frame 61, and an installation height of the control unit 62 is higher than the detection liquid level of the liquid level detecting apparatus 30.

In embodiments of this application, the control device 60 is installed in the compartment body 20 and is independently configured with a liquid level detecting module therein to be electrically connected to the liquid level detecting apparatus 30. It is to be understood that the liquid level detecting apparatus 30, when performing the detection, may transmit the detection information to the control device 60 by way of an electrical signal through a line, so that the control device 60 issues other commands, such as powering off, and giving an alarm, based on the detection information, in order to remind the staff to handle the situation in time, and to prevent insulation failure or electric shock hazards.

In these optional embodiments, the overall height of the control device 60 is higher than those of the charging devices 40, the control unit 62 is disposed on the third supporting frame 61, and moreover, the control unit 62 is generally closed and has a certain water-blocking function. Therefore, the installation height of the control unit 62 can meet to be higher than the first predetermined height, thereby effectively preventing the control unit 62 from coming into contact with the water.

According to one embodiment of this application, the installation height of the control unit 62 is at least higher than the first predetermined height.

In these optional embodiments, based on the arrangement of the third supporting frame 61, the height of the control unit 62 is higher than those of the charging devices 40, and the installation height of the control device 60 only needs to be higher than the first predetermined height, thereby ensuring safety of the control unit 62.

According to one embodiment of this application, the compartment body 20 is configured to power off when the first liquid level detecting member 31 detects that the liquid level reaches the first predetermined height.

In embodiments of this application, a protection switch of a power supply apparatus may be controlled to be disconnected when the obtained monitoring result characterizes that the termination condition of the battery compartment 100 is currently satisfied. For example, when the depth value of the accumulated water reaches 30 mm on the horizontal plane, the termination condition of the battery compartment 100 is considered to be currently satisfied, so the protection switch of the power supply apparatus for providing electrical energy to the battery compartment 100 is disconnected. At this time, controlling the disconnection of the protection switch of the power supply apparatus may be manually operated by an operator, or the control unit 62 may issue a power-off command to the power supply apparatus for providing electrical energy to the battery compartment 100, so that the power supply apparatus powers off automatically. Powering off means electrical disconnection between a power supply and the components, for example, the charging device 40, the thermal management device 50, the control unit 62, and the like are powered off.

In these optional embodiments, when the first liquid level detecting member 31 detects that the liquid level reaches the first predetermined height, the battery compartment 100 cannot be guaranteed to operate safely, thereby controlling the whole battery compartment 100 to power off, thereby preventing short-circuiting of electrical components in the battery compartment 100, reducing the loss of the battery compartment 100, and also preventing electric shock of a person due to electrification of the accumulated water.

According to one embodiment of this application, the compartment body 20 includes a first chamber 21 and a second chamber 22 stacked in a height direction, and at least one of the first chamber 21 and the second chamber 22 is provided with the liquid level detecting apparatus 30.

In embodiments of this application, In embodiments of this application, in the height direction, the first chamber 21 is disposed above the second chamber 22, or, the first chamber 21 is disposed below the second chamber 22. In the case where the first chamber 21 is disposed above the second chamber 22, the liquid level detecting apparatus 30 may be disposed in the second chamber 22, where water is more likely to be present in the second chamber 22 due to the low terrain of the second chamber 22; or, the liquid level detecting apparatus 30 may be disposed in the first chamber 21, and rainwater enters into the second chamber 22 in case of leakage of rainwater from the compartment body 20; or, the first chamber 21 and the second chamber 22 are both provided with the first chamber 21 and the second chamber 22, so that the liquid level of each chamber is monitored.

In these optional embodiments, the compartment body 20 includes the first chamber 21 and the second chamber 22 stacked in the height direction, the overall layout is more reasonable, and the overall space structure is more compact, thereby achieving the purpose of using a smaller space to achieve larger functions.

According to one embodiment of this application, in the height direction, the first chamber 21 is disposed below the second chamber 22, and the liquid level detecting apparatus 30 is disposed in the first chamber 21.

In embodiments of this application, in the case where the first chamber 21 is disposed below the second chamber 22, because the charging cabinets 43 are bulky, all of the charging cabinets 43 may be disposed in the first chamber 21, which facilitates the installation and maintenance of the charging cabinets 43. Or one part of the charging cabinets 43 may be disposed in the first chamber 21 and the other part of the charging cabinets 43 may be disposed in the second chamber 22 or other chambers. Or one part of the charging bases may be disposed in the second chamber 22, and the other part of the charging bases may be disposed in the first chamber 21 or other layers, making full use of the internal space of a box, and more charging bases are provided to be able to charge more batteries 10 at the same time. The thermal management device 50 may be disposed in the first chamber 21 so as to facilitate cooling of the charging cabinets 43. The control unit 62 may be disposed in the first chamber 21 so as to facilitate operation of the control unit 62.

In these optional embodiments, the first chamber 21 disposed in the lower layer is more prone to water accumulation due to the lower terrain. Therefore, the liquid level detecting apparatus 30 is disposed in the first chamber 21 for more effectively protecting the battery compartment 100.

According to one embodiment of this application, the first chamber 21 is provided with a drainage structure.

In embodiments of this application, the drainage structure includes a drainage pump, an outlet pipe and an inlet pipe, with one end of the inlet pipe being connected to the drainage pump and the other end being disposed towards the accumulated water, and one end of the inlet pipe being connected to the drainage pump and the other end being disposed towards the outside of the compartment body 20. The drainage structure realizes discharging the accumulated water that enters into the interior of the compartment body 20. It can be understood that when the drainage pump operates, the accumulated water flows into the drainage pump from the inlet pipe and out of the outlet pipe so as to be discharged from the compartment body 20.

In these optional embodiments, the first chamber 21 is provided with the drainage structure to drain the accumulated water in the compartment body 20 out of the compartment body 20, thereby preventing the accumulated water from rising continuously to ensure the safety of the battery compartment 100.

According to a second aspect, this application provides a battery swap station 1000, including batteries 10 and the battery compartment 100 according to any implementation of the first aspect of this application. The battery compartment 100 is used for placing the batteries 10.

As a specific embodiment of this application, as shown in FIG. 3 and FIG. 5, the battery compartment 100 of an embodiment of this application includes the compartment body 20, and the liquid level detecting apparatus 30, the charging devices 40, the thermal management device 50 and the control device 60 are disposed in the compartment body 20. The compartment body 20 includes the first chamber 21 and the second chamber 22 stacked in the height direction, the first chamber 21 is lower than the second chamber 22, and the liquid level detecting apparatus 30 is disposed in the first chamber 21. The liquid level detecting apparatus 30 includes the supporting member 33, the first liquid level detecting member 31 and the second liquid level detecting member 32. The first liquid level detecting member 31 and the second liquid level detecting member 32 are both disposed on the supporting member 33. The first liquid level detecting member 31 is used for detecting whether the liquid level in the compartment body 20 reaches the first predetermined height, and the compartment body 20 is configured to give an alarm when the first liquid level detecting member 31 detects that the liquid level reaches the first predetermined height. The second liquid level detecting member 32 is used for detecting whether the liquid level in the compartment body 20 reaches the second predetermined height, and the compartment body 20 is configured to give an alarm when the first liquid level detecting member 31 detects that the liquid level reaches the first predetermined height. The second predetermined height is higher than the first predetermined height. The first liquid level detecting member 31 and the second liquid level detecting member 32 are both waterlogging sensors. The charging devices 40 include the charging connectors 41, the charging bases and the charging cabinets 43, and the charging connectors 41 and the charging bases are higher than the second predetermined height. The charging cabinets 43 include the supporting frames and the charging units, and the charging units are higher than the first predetermined height. The thermal management device 50 includes the second supporting frame 51 and the thermal management unit 52, and the installation height of the thermal management unit 52 is higher than the first predetermined height. The control device 60 includes the third supporting frame 61 and the control unit 62, and the control unit 62 is higher than the first predetermined height. The battery compartment 100 of this application is provided with the liquid level detecting apparatus 30, used for performing real-time detection on the liquid level in the compartment body 20, and providing accurate detection information, so water accumulation conditions in the compartment body 20 are mastered, and response is made in time. When the detected liquid level reaches the predetermined height, the battery compartment 100 can take measures, such as giving an alarm, powering off and transferring a device, thereby avoiding circuit and mechanical failures of the battery compartment 100 due to water accumulation, reducing the difficulty of operating and maintaining the battery compartment 100, improving the safety of the battery compartment 100, and preventing insulation failure or electric shock hazards.

Although this application has been described with reference to preferred embodiments, various improvements can be made thereto and components thereof can be replaced with equivalents without departing from the scope of this application. In particular, each of the technical features referred to in the various embodiments can be combined in any manner as long as there is no structural conflict. This application is not limited to the specific embodiments disclosed in this specification, but includes all technical solutions falling within the scope of the claims.

## Claims

1. A battery compartment, comprising:
a compartment body; and
a liquid level detecting apparatus, disposed in the compartment body and used for performing real-time detection on a liquid level in the compartment body.

2. The battery compartment according to claim 1, wherein the liquid level detecting apparatus comprises:
a first liquid level detecting member and a second liquid level detecting member, wherein the first liquid level detecting member is used for detecting whether the liquid level in the compartment body reaches a first predetermined height, the second liquid level detecting member is used for detecting whether the liquid level in the compartment body reaches a second predetermined height, and the second predetermined height is higher than the first predetermined height.

3. The battery compartment according to claim 2, wherein:
the compartment body is configured to give an alarm when the first liquid level detecting member detects that the liquid level reaches the first predetermined height; and/or,
the compartment body is configured to give an alarm when the second liquid level detecting member detects that the liquid level reaches the second predetermined height.

4. The battery compartment according to any one of claims 2 to 3, wherein:
the liquid level detecting apparatus further comprises:
a supporting member, connected to the compartment body; and
the first liquid level detecting member and the second liquid level detecting member are disposed on the supporting member.

5. The battery compartment according to any one of claims 2 to 3, wherein
the first liquid level detecting member and/or the second liquid level detecting member are/is selected from at least one of a water level sensor or a waterlogging sensor.

6. The battery compartment according to any one of claims 2 to 5, wherein
the compartment body further comprises charging devices accommodated in the compartment body, charging connectors are installed on the charging devices, and installation positions of the charging connectors are higher than a detection liquid level of the liquid level detecting apparatus.

7. The battery compartment according to claim 6, wherein
the installation positions of the charging connectors are higher than the second predetermined height.

8. The battery compartment according to claim 7, wherein
the charging devices comprise charging bases, the charging connectors are installed on the charging bases, and heights of the charging bases are higher than the second predetermined height.

9. The battery compartment according to any one of claims 2 to 8, wherein
the charging devices further comprise charging cabinets, each charging cabinet comprises a first supporting frame and a charging unit, the charging unit is installed on the first supporting frame, and an installation height of the charging unit is higher than a detection liquid level of the liquid level detecting apparatus.

10. The battery compartment according to claim 9, wherein
the installation height of each charging unit is at least higher than the first predetermined height.

11. The battery compartment according to any one of claims 2 to 10, wherein
the compartment body further comprises a thermal management device accommodated in the compartment body, and
wherein the thermal management device comprises a second supporting frame and a thermal management unit, the thermal management unit is installed on the second supporting frame, and an installation height of the thermal management unit is higher than a detection liquid level of the liquid level detecting apparatus.

12. The battery compartment according to claim 11, wherein
the installation height of the thermal management unit is at least higher than the first predetermined height.

13. The battery compartment according to any one of claims 2 to 12, wherein
the compartment body is further internally provided with a control device, and
wherein the control device comprises a third supporting frame and a control unit, the control unit is installed on the third supporting frame, and an installation height of the control unit is higher than a detection liquid level of the liquid level detecting apparatus.

14. The battery compartment according to claim 13, wherein
the installation height of the control unit is at least higher than the first predetermined height.

15. The battery compartment according to any one of claims 6 to 14, wherein
the compartment body is configured to power off when the first liquid level detecting member detects that the liquid level reaches the first predetermined height.

16. The battery compartment according to any one of claims 1 to 15, wherein
the compartment body comprises a first chamber and a second chamber stacked in a height direction, and at least one of the first chamber and the second chamber is provided with the liquid level detecting apparatus.

17. The battery compartment according to claim 16, wherein
in the height direction, the first chamber is disposed below the second chamber, and the liquid level detecting apparatus is disposed in the first chamber.

18. The battery compartment according to claim 17, wherein
the first chamber is provided with a drainage structure.

19. A battery swap station, comprising:
a battery; and
the battery compartment according to any one of claims 1 to 18, the battery compartment being used for placing the battery.
